# EUROPÄISCHE PATENTSCHRIFT

(11) **EP 2 233 190 B1**
(45) Veröffentlichungstag und Bekanntmachung des Hinweises auf die Patenterteilung: **02.01.2013**
(21) Anmeldenummer: 10156320.3
(22) Anmeldetag: 12.03.2010
(51) Int. Cl.: B01D 35/30

(54) **Flüssigkeitsfilter**
Liquid filter
Filtre de liquide

(30) Priorität: 25.03.2009 DE 102009014934
(43) Veröffentlichungstag der Anmeldung: 29.09.2010
(73) Patentinhaber: Mahle International GmbH, 70376 Stuttgart (DE)
(72) Erfinder: Deschamps, Gregory, 78180, Montigny-Le-BTX (FR); Lamotte, Johann, 95260, Beaumont sur Oise (FR); Ruffet, Valentin, 92500, Rueil Malmaison (FR)
(74) Vertreter: BRP Renaud & Partner

(56) Entgegenhaltungen:
- EP-A1- 1 281 426
- DE-U1- 29 915 844
- US-A- 5 154 823
- US-B1- 6 569 326

## Beschreibung

Die vorliegende Erfindung betrifft ein Flüssigkeitsfilter mit einem Filtergehäuse, in welchem wenigstens ein Filterelement angeordnet ist, gemäß dem Oberbegriff des Anspruchs 1.

Aus der EP 1 222 010 B1 ist ein gattungsgemäßes Flüssigkeitsfilter bekannt, bei welchem diejenigen Bestandteile eines Filtergehäuses, die bei einem herkömmlichen Filtergehäuse mit diesem einteilig hergestellt sind und zur Erfüllung ihrer Funktion nachbearbeitet werden müssen, in einem separat herstellbaren Funktionsträgereinsatz zusammengefasst sind. Auf diese Weise soll sich einerseits die Möglichkeit einer externen Nachbearbeitung dieser Funktionselemente ergeben und andererseits kann der Funktionsträgereinsatz auch derart hergestellt werden, dass eine Nachbearbeitung gänzlich entfallen kann. Darüber hinaus können besonders komplexe Funktionselemente in den Funktionsträgereinsatz integriert werden. Üblicherweise wird dabei ein derartiger Funktionsträger mit dem zugehörigen Filtergehäuse verschraubt.

Aus der US 6 569 326 ist ein Flüssigkeitsfilter bekannt, bei welchem einer Funktionsträger, der einen Kanal umfasst, mit dem Filtergehäuse des Flüssigkeitsfilters über eine Clipsverbindung verbunden ist.

Die vorliegende Erfindung beschäftigt sich mit dem Problem, für ein Flüssigkeitsfilter der gattungsgemäßen Art, eine verbesserte oder zumindest eine andere Ausführungsform anzugeben, die insbesondere leichter zu montieren ist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, bei einem Flüssigkeitsfilter mit einem an sich bekannten Funktionsträger, diesen nicht mehr mit einem Filtergehäuse des Flüssigkeitsfilters zu verschrauben, sondern erfindungsgemäß zu verclipsen. Der Funktionsträger ist dabei in bekannter Weise in einem Teilbereich des Filtergehäuses angeordnet und umfasst zumindest einen Einlasskanal bzw. einen Auslasskanal. Generell dient somit der Funktionsträger als Adapterelement zwischen dem Filtergehäuse und dem wenigstens einen im Filtergehäuse angeordneten Filterelement. Durch die Verbindung des Funktionsträgers mit dem Filtergehäuse über eine Clipsverbindung kann die Montage des Funktionsträgers im Filtergehäuse deutlich vereinfacht und damit kostengünstiger realisiert werden, wobei zudem zusätzliche Befestigungselemente, wie bspw. Schrauben, entfallen können. Durch die Reduzierung der Teilevielfalt können dabei auch Lager- und Logistikkosten reduziert werden. Von besonderem Vorteil aber ist, dass die erfindungsgemäße Clipsverbindung sowie deren zugehörigen Elemente, bspw. eine Rastöffnung und eine damit zusammenwirkende Rastnase einstückig mit dem Filtergehäuse bzw. mit dem Funktionsträger ausgebildet und zusammen mit diesen Komponenten in einem einzigen Arbeitsschritt, bspw. in einem Spritzgussverfahren, hergestellt werden können. Im Vergleich zu einer Schraubverbindung lässt sich somit nicht nur eine bezüglich der Materialkosten, sondern zusätzlich auch eine bezüglich der Montagekosten günstige Verbindung schaffen.

Bei einer vorteilhaften Weiterbildung der erfindungsgemäßen Lösung, ist der Funktionsträger aus Kunststoff, insbesondere als Kunststoffspritzgussteil, ausgebildet. Ein derartig hergestellter Funktionsträger bietet nicht nur die Möglichkeit, diesen kostengünstig und nahezu frei wählbar bezüglich seiner Formgebung zu realisieren, sondern es ermöglicht zudem, den erfindungsgemäßen Funktionsträger relativ flexibel an sich gegebenenfalls konstruktiv ergebende Änderungen anzupassen. In diesem Fall muss lediglich ein Spritzgusswerkzeug angepasst werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1a: eine Schnittdarstellung durch ein Filtergehäuse mit einem über eine Clipsverbindung darin befestigten Funktionsträger,
- Fig. 1b: eine Darstellung wie in Fig. 1a, jedoch bei einer Ansicht und einem lediglich teilweise in das Filtergehäuse eingeführten Funktionsträger,
- Fig. 1c: eine Detaildarstellung aus Fig. 1a im Bereich der Klippsverbindung,
- Fig. 2: eine weitere mögliche Ausführungsform eines erfindungsgemäßen Funktionsträgers.

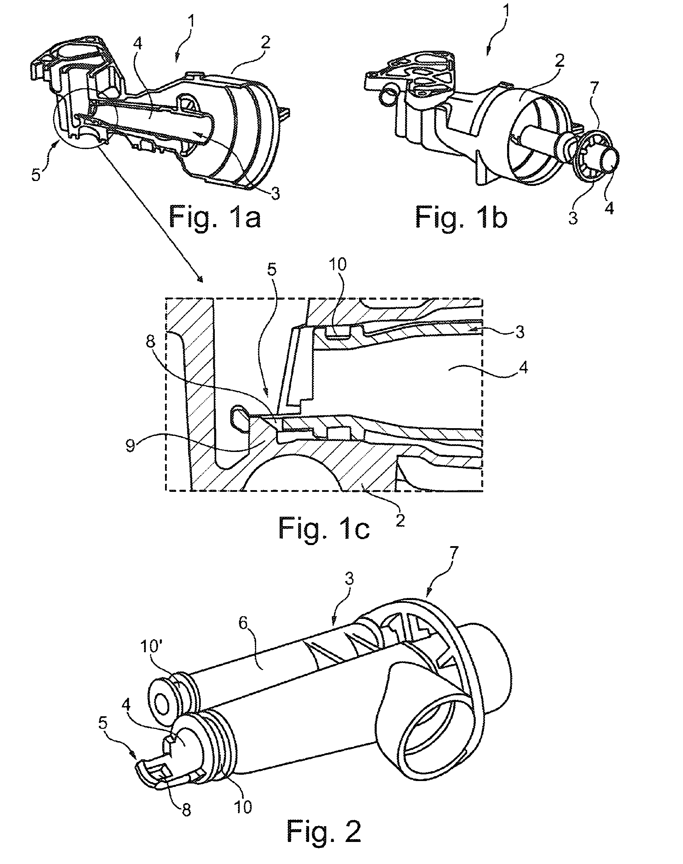

Entsprechend den Fig. 1a und 1b, weist ein lediglich teilweise dargestelltes Flüssigkeitsfilter 1 ein Filtergehäuse 2 auf, in welchem ein nicht dargestelltes Filterelement angeordnet ist. Das Flüssigkeitsfilter 1 kann dabei bspw. als Öl- oder Kraftstofffilter ausgebildet sein. In einem Teilbereich des Filtergehäuses 2 ist dabei ein Funktionsträger 3 angeordnet, der wenigstens einen Einlasskanal oder - wie dargestellt - einen Auslasskanal 4 umfasst. Zur vereinfachten Verbindung, dass heißt zur vereinfachten Montage des Funktionsträgers 3 im/am Filtergehäuse 2, wird dieser über eine Clipsverbindung 5 mit dem Filtergehäuse 2 verclipst.

Im Vergleich zur bisherigen Bauweise, bei welcher der Funktionsträger 3 mit dem Filtergehäuse 2 verschraubt wurde, entfällt dank der erfindungsgemäßen Clipsverbindung 5 nicht nur ein erforderliches Verbindungsmittel, wie bspw. eine Schraube, sondern der Montagevorgang kann an sich aus deutlich schneller ausgeführt werden. Zur Verbindung des Funktionsträgers 3 mit dem Filtergehäuse 2 muss dieser lediglich in das Filtergehäuse 2 eingeschoben werden und zwar soweit, bis er mit dem Filtergehäuse 2 verrastet. In den gezeichneten Fällen ist dabei lediglich eine einzige Clipsverbindung 5 vorgesehen, wobei auch denkbar ist, dass zur besseren Verbindung des Funktionsträgers 3 mit dem Filtergehäuse 2 mehrere Clipsverbindungen 5 vorgesehen werden.

Betrachtet man die Fig. 2, so kann man erkennen, dass der Funktionsträger 3 zusätzlich zum Auslasskanal 4 auch einen Leerlaufkanal 6 aufweist ebenso wie eine Gleitrampe 7 für einen filterelementseitig angeordneten und nicht gezeigten Pin. Betrachtet man insbesondere die Fig. 2, so kann man erkennen, dass am freien Ende des Auslasskanals 4 eine Rastöffnung 8 vorgesehen ist, in die bei im Filtergehäuse 2 montierten Funktionsträger 3 eine filtergehäuseseitige Rastnase 9 (vgl. Fig. 1c) eingreift. Generell ist dabei der Funktionsträger 3 vorzugsweise aus Kunststoff, insbesondere als so genanntes Kunststoffspritzgussteil, ausgebildet und dadurch einerseits kostengünstig herzustellen und andererseits relativ flexibel an gegebenenfalls auftretende konstruktive Änderungen anzupassen. An einem freien Ende des Leerlaufkanals 6 und/oder des Auslasskanals 4 kann eine Ringnut 10,10' zur Aufnahme einer nicht gezeigten O-Ringdichtung vorgesehen sein, wobei die in der Ringnut 10 des Auslasskanals 4 angeordnete O-Ringdichtung eine Reinseite (Kanalinnenraum) von einer Rohseite (Umgebung) trennt.

Mit der erfindungsgemäßen Clipsverbindung 5 kann somit eine zur bisher bekannten Befestigung kostengünstige und einfach zu montierende Alternative angeboten werden.

## Patentansprüche

1. Flüssigkeitsfilter (1),
- mit einem Filtergehäuse (2), in welchem wenigstens ein Filterelement angeordnet ist,
- mit einem in einem Teilbereich des Filtergehäuses (2) angeordneten Funktionsträger (3), der zumindest einen Einlasskanal oder einen Auslasskanal (4) umfasst,
- wobei der Funktionsträger (3) mit dem Filtergehäuse (2) über zumindest eine Clipsverbindung (5) verbunden ist,
**dadurch gekennzeichnet,**
**dass** der Funktionsträger (3) zusätzlich zum Auslasskanal (4) auch einen Leerlaufkanal (6) aufweist, ebenso wie eine Gleitrampe (7) für einen filterelementseitig angeordneten Pin.

2. Flüssigkeitsfilter nach Anspruch 1,
**dadurch gekennzeichnet,**
**dass** die wenigstens eine Clipsverbindung (5) im Bereich eines freien Endes des Ein-/Auslasskanals (4) angeordnet ist.

3. Flüssigkeitsfilter nach Anspruch 1 oder 2,
**dadurch gekennzeichnet,**
**dass** der Funktionsträger (3) aus Kunststoff, insbesondere als Kunststoffspritzgussteil, ausgebildet ist.

4. Flüssigkeitsfilter nach einem der Ansprüche 1 bis 3,
**dadurch gekennzeichnet,**
**dass** am freien Ende des Ein-/Auslasskanals (4) eine Rastöffnung (8) vorgesehen ist, in die bei im Filtergehäuse (2) montiertem Funktionsträger (3) eine filtergehäuseseitige Rastnase (9) eingreift.

5. Flüssigkeitsfilter nach einem der Ansprüche 1 bis 4,
**dadurch gekennzeichnet,**
**dass** das Flüssigkeitsfilter (1) als Ölfilter ausgebildet ist.

6. Flüssigkeitsfilter nach einem der Ansprüche 1 bis 5,
**dadurch gekennzeichnet,**
**dass** an einem freien Ende des Leerlaufkanals (6) und/oder des Auslasskanals (4) eine Ringnut (10,10') zur Aufnahme einer O-Ringdichtung vorgesehen ist.

## Claims

1. A liquid filter (1)
- with a filter housing (2) in which at least one filter element is arranged,
- with a function carrier (3) which is arranged in a section of the filter housing (2), and which comprises at least one inlet channel or one outlet channel (4),
- wherein the function carrier (3) is connected to the filter housing (2) by means of at least one clip connection (5),
**characterized in**
**that** in addition to the outlet channel (4), the function carrier (3) also has an idle channel (6) as well as a sliding ramp (7) for a pin arranged on the filter element side.

2. The liquid filter according to claim 1, **characterized in that** the at least one clip connection (5) is arranged in the region of a free end of the inlet/outlet channel (4).

3. The liquid filter according to claim 1 or claim 2, **characterized in that** the function carrier (3) is formed from plastic, in particular as a plastic injection molding part.

4. The liquid filter according to any one of the claims 1 to 3, **characterized in that** on the free end of the inlet/outlet channel (4), a latching opening (8) is provided with which a latching lug (9) located on the filter housing side engages when the function carrier (3) is assembled in the filter housing (2).

5. The liquid filter according to any one of the claims 1 to 4, **characterized in that** the liquid filter (1) is designed as an oil filter.

6. The liquid filter according to any one of the claims 1 to 5, **characterized in that** on a free end of the idle channel (6) and/or of the outlet channel (4), a ring groove (10, 10') is provided for receiving an 0-ring seal.

## Revendications

1. Filtre à liquide (1),
- comportant un logement de filtre (2), dans lequel au moins un élément de filtre est disposé,
- comportant un support fonctionnel (3) disposé dans une zone partielle du logement de filtre (2), qui comprend au moins un canal d'admission ou un canal d'échappement (4),
- dans lequel le support fonctionnel (3) est relié au logement de filtre (2) par l'intermédiaire d'au moins une liaison par clip (5),
**caractérisé en ce que**
le support fonctionnel (3) présente en plus du canal d'échappement (4) également un canal de marche à vide (6), ainsi qu'une rampe de coulissement (7) pour une goupille disposée du côté de l'élément de filtre.

2. Filtre à liquide selon la revendication 1, **caractérisé en ce que** au moins une liaison par clip (5) est disposée au niveau d'une extrémité libre du canal d'admission/d'échappement (4).

3. Filtre à liquide selon les revendications 1 ou 2, **caractérisé en ce que** le support fonctionnel (3) est réalisé en plastique, notamment comme une pièce moulée par injection en plastique.

4. Filtre à liquide selon une des revendications 1 à 3, **caractérisé en ce que** à l'extrémité libre du canal d'admission/d'échappement (4) une ouverture d'encliquetage (8) est prévue, dans laquelle un nez d'encliquetage (9) du côté du logement de filtre vient en prise quand le support fonctionnel (3) est monté dans le logement de filtre (2).

5. Filtre à liquide selon une des revendications 1 à 4, **caractérisé en ce que** le filtre à liquide (1) est conçu comme un filtre à huile.

6. Filtre à liquide selon une des revendications 1 à 5, **caractérisé en ce que** à une extrémité libre du canal de marche à vide (6) et/ou du canal d'échappement (4) une rainure annulaire (10, 10') pour recevoir un joint torique d'étanchéité est prévu.
